# DEMANDE DE BREVET EUROPEEN

(11) **EP 4 851 041 A1**
(43) Date de publication de la demande: **09.12.2026**
(21) Numéro de dépôt: 26180735.8
(22) Date de dépôt: 22.05.2026
(51) Int. Cl.: B64C 27/12, B64D 31/06, B64D 35/08, B64D 43/00, F16D 41/00, B64D 45/00

(54) **MÉTHODE DE SURVEILLANCE D'UNE ROUE LIBRE, MÉTHODE DE CONTRÔLE D'UNE INSTALLATION MOTRICE, INSTALLATION MOTRICE ET AÉRONEF**

(30) Priorité: 06.06.2025 FR 2506175; 17.12.2025 FR 2515594
(71) Demandeur: Airbus Helicopters, 13725 Marignane Cedex (FR)
(72) Inventeur: CERQUEIRA, Stéphane, 13725 MARIGNANE Cedex (FR); BARAIS, Olivier, 13725 MARIGNANE Cedex (FR)
(74) Mandataire: GPI Brevets

(57) **Abrégé**

La présente invention concerne une méthode de surveillance d'une roue libre (30), équipant notamment une installation motrice (80) d'un aéronef. Cette méthode comprend des acquisitions de valeurs évaluées de plusieurs paramètres de ladite roue libre (30) à l'aide de senseurs (61-69) situés à proximité de la roue libre (30). Cette méthode comprend également, pour chaque paramètre, une comparaison d'au moins une desdites valeurs évaluées avec au moins une limite respective, puis une émission d'une alerte en fonction de ladite comparaison, afin de signaler si l'usure de ladite roue libre (30).

## Description

La présente invention se situe dans le domaine des installations motrices, et en particulier des installations motrices destinées aux aéronefs.

La présente invention concerne une méthode de surveillance d'une roue libre ainsi qu'une méthode de contrôle d'une installation motrice comportant une telle roue libre. La présente invention vise également une installation motrice appliquant ces méthodes ainsi qu'un aéronef comportant cette installation motrice.

Une roue libre est usuellement munie d'une partie menante, d'une partie menée, et d'au moins un organe de liaison en rotation.

A l'arrêt ou tant que la partie menée tourne plus vite que la partie menante autour d'un axe de rotation, la roue libre est dans un mode de fonctionnement dénommé « désynchronisé » ou « désengagé » par commodité. La partie menante ne transmet pas un couple moteur à la partie menée et inversement. La partie menée et la partie menante sont désolidarisées en rotation autour de l'axe de rotation.

En revanche, dans un mode de fonctionnement dénommé « synchronisé » ou « engagé » par commodité, la partie menante et la partie menée tournent à la même vitesse et conjointement autour de l'axe de rotation. La partie menante transmet un couple moteur à la partie menée via le ou les organes de liaison.

Selon un exemple, une roue libre à rouleaux peut comporter une partie menante ayant une partie périphérique munie de rampes. Chaque rampe est inclinée par rapport à une direction tangente à un cercle centré sur l'axe de rotation. Cette partie périphérique munie de rampes est parfois dénommée « roue à rampes ». A l'inverse, la partie menée comporte un moyeu disposé autour de la partie menante, ce moyeu comportant un anneau ayant une face cylindrique au regard des rampes. Par suite, des organes de liaison de type rouleaux sont portés par une cage et sont disposés dans l'espace séparant radialement les rampes et la face cylindrique. Durant le mode de fonctionnement désengagé, les rouleaux sont chacun disposés au pied d'une rampe et ne lient pas en rotation la partie menante et la partie menée. Lors du passage vers le mode de fonctionnement synchronisé, les rouleaux sont déplacés vers le sommet des rampes et se coincent temporairement entre les rampes et la face cylindrique. La partie menante entraîne alors en rotation la partie menée via les rouleaux.

Cette réalisation comporte alors un arbre interne menant muni de la roue à rampes et d'un anneau mené ayant une face cylindrique agencée autour de l'arbre interne menant.

Alternativement, une roue libre peut comprendre un anneau menant à rampes entourant un arbre mené ayant une face cylindrique. Par exemple, une roue libre à osselets peut comprendre une partie menante entourant partiellement une partie menée. D'autres types de roue libre comportent au moins un cliquet ou un dispositif à galets par exemple.

Au sein d'une installation motrice d'un aéronef, la partie menante d'une roue libre peut être mise en mouvement directement ou indirectement par un moteur, alors que la partie menée de la roue libre peut être reliée cinématiquement à un rotor. La roue libre peut être agencée au sein du moteur, ou au sein d'une boîte de transmission de puissance, voire au sein d'une chaîne cinématique reliant un moteur à la boîte de transmission de puissance. Par exemple, la boîte de transmission de puissance peut comprendre un système d'entrée mécanique de transmission de couple par moteur, chaque système d'entrée mécanique de transmission de couple incluant une roue libre.

Une telle roue libre a pour fonction de permettre l'entraînement du rotor par le moteur et d'interdire a contrario l'entraînement du moteur par la chaîne mécanique de puissance, voire le blocage du rotor en cas de blocage du moteur. La roue libre peut notamment présenter un intérêt durant une phase d'autorotation de la voilure tournante par exemple.

Par ailleurs, une installation motrice d'aéronef peut comprendre plusieurs moteurs à combustion, dits aussi plus simplement « moteurs ».

Sur un aéronef conventionnel, une installation motrice multimoteur fonctionne, hors cas de panne, selon un mode de fonctionnement collaboratif durant lequel les moteurs génèrent chacun une puissance motrice contribuant conjointement à mettre en mouvement le rotor.

En revanche, une installation motrice peut éventuellement fonctionner selon un mode de fonctionnement asymétrique en mettant en veille au moins un des moteurs. Lors du mode de fonctionnement asymétrique, un moteur actif est régulé pour assurer la mise en rotation d'un rotor en transmettant au rotor, avec son arbre de puissance, une puissance motrice non nulle. Un moteur en veille est en revanche en veille afin de ne pas transmettre une puissance motrice au rotor.

Un moteur en veille peut être arrêté en ayant une chambre de combustion éteinte. La chambre de combustion du moteur en veille n'est alors plus alimentée en carburant, et sur un turbomoteur, les organes tournants du générateur de gaz peuvent être ou ne pas être mis en mouvement par une machine électrique.

Alternativement, un moteur en veille peut fonctionner à un régime de ralenti ou de super-ralenti, en ayant une chambre de combustion allumée et alimentée en carburant, le moteur en veille fonctionnant à très faible vitesse de rotation et ne transmettant alors aucune puissance à la voilure tournante, le ou les moteurs actifs assurant l'intégralité de la fourniture de puissance. Par exemple, le moteur en veille est dans un régime de ralenti en ayant par exemple une vitesse de rotation de l'ordre de 85% de sa vitesse nominale et 45% de sa vitesse nominale dans un régime de super-ralenti.

Dès lors, lorsque le mode de fonctionnement asymétrique est mis en œuvre, la roue libre reliée au moteur en veille est dans le mode désengagé. Par suite, cette roue libre est susceptible de rester dans le mode désengagé pendant une durée prolongée lors d'une mission.

De plus, la mise en œuvre du mode de fonctionnement asymétrique peut induire de nombreuses mises en veille d'un moteur engendrant de nombreux passages du mode de fonctionnement collaboratif au mode de fonctionnement asymétrique, et inversement de nombreuses réactivations d'un moteur en veille engendrant de nombreux passages du mode de fonctionnement asymétrique au mode de fonctionnement collaboratif. La réactivation d'un moteur en veille peut en particulier être réalisée rapidement, un tel démarrage rapide pouvant engendrer sur la roue libre des contraintes mécaniques plus importantes que lors d'un démarrage conventionnel. La mise en œuvre du mode de fonctionnement asymétrique peut alors générer un endommagement accéléré de la roue libre associée en raison des nombreux changements de modes de fonctionnement, au regard d'une roue libre agencée sur un aéronef ne mettant pas en œuvre le mode de fonctionnement asymétrique.

En outre, sur un aéronef multimoteur, les roues libres sont usuellement identiques, et ne font pas l'objet d'opérations de maintenance personnalisées. Or, les roues libres peuvent subir une usure dissymétrique sur un aéronef mettant en œuvre le mode de fonctionnement asymétrique, en fonction notamment des cycles de fonctionnement en veille des moteurs associés.

La présente invention a alors pour objet de proposer une méthode innovante de surveillance d'une roue libre, pour notamment prendre en considération l'usure spécifique d'une roue libre au sein d'une installation motrice multimoteur d'un aéronef pouvant mettre en œuvre un mode de fonctionnement asymétrique.

La présente invention a aussi pour objets une méthode de contrôle d'une installation motrice muni d'une telle roue libre ainsi qu'une telle installation motrice et un aéronef équipé d'une telle installation motrice.

La présente invention concerne ainsi une méthode de surveillance d'une roue libre. Cette roue libre est agencée dans un carter, la roue libre comprenant une partie menante et une partie menée agencées au moins dans un volume interne délimité par le carter, un circuit de lubrification lubrifiant ladite roue libre dans le carter, plusieurs senseurs surveillant le fonctionnement de la roue libre.

La méthode comprend les étapes suivantes réalisées de manière successive :
- acquisitions de valeurs évaluées de plusieurs paramètres à l'aide des senseurs, les paramètres étant choisis parmi :
   - un signal vibratoire déterminé à l'aide d'un accéléromètre,
   - une première température d'une peau du carter déterminée à l'aide d'un premier senseur de température,
   - une pression d'un fluide circulant au sein du circuit de lubrification déterminée à l'aide d'un senseur de pression,
   - une seconde température du fluide circulant au sein du circuit de lubrification déterminée à l'aide d'un second senseur de température,
   - une quantité de limaille captée dans le fluide par un bouchon magnétique,
   - un premier nombre de cycles synchronisés et un second nombre de cycles désynchronisés correspondant respectivement à la roue libre engagée et désengagée déterminés à l'aide d'un compteur, et
   - une différence de vitesse de rotation entre la partie menante et la partie menée, déterminée à l'aide d'au moins un tachymètre,
   - une durée d'engagement de la roue libre,
   - une durée d'accostage/stabilisation de la roue libre,
   - une survitesse d'accostage de la partie menante de la roue libre, déterminée à l'aide d'au moins un tachymètre,
   - une durée d'accélération angulaire de la partie menante de la roue libre,
- pour chaque paramètre, comparaison d'au moins une des valeurs évaluées de ce paramètre avec au moins une limite respective,
- émission d'une alerte en fonction de la comparaison.

La roue libre peut par exemple être agencée au sein d'une installation motrice possiblement multimoteur. Cette roue libre peut également faire partie d'un boîtier instrumenté tel que décrit dans la demande de brevet français ayant pour numéro de dépôt : FR 2506175.

Un calculateur principal peut être associé à la roue libre afin de mettre en œuvre la méthode de surveillance selon l'invention, par exemple en exécutant des instructions stockées dans une mémoire du calculateur principal ou dans une mémoire reliée à ce calculateur principal. Ce calculateur principal peut recevoir, à l'aide de liaisons filaires ou sans fil, des signaux de mesure, électriques ou optiques, numériques ou analogiques, émis par les senseurs. Ces signaux de mesure sont représentatifs des valeurs évaluées de chaque paramètre.

Le calculateur principal, après réception de ces signaux de mesure pour chaque paramètre, compare au moins une des valeurs évaluées de ce paramètre avec au moins une limite respective préalablement établie et associée à ce paramètre.

De la sorte, la méthode de surveillance selon l'invention permet avantageusement de surveiller le fonctionnement de la roue libre pour détecter une dégradation de ses performances, une usure voire un dysfonctionnement par exemple, en cas de dépassement d'une ou de plusieurs limites. Dans le cas d'une telle détection, une alerte est émise à l'aide d'un alerteur recevant, via une liaison filaire ou sans fil, un signal d'alerte, électrique ou optique, numérique ou analogique, émis par un calculateur principal. Cette alerte peut être émise sous une forme sonore, visuelle et/ou haptique.

La méthode de surveillance selon l'invention permet ainsi de générer le cas échéant une alerte pour signaler qu'une opération de maintenance doit être réalisée sur la roue libre.

Les senseurs peuvent comporter au moins deux des senseurs suivants : au moins un accéléromètre agencé sur le carter, au moins un premier senseur de température agencé sur le carter, au moins un senseur de pression mesurant une pression d'un fluide au sein du circuit de lubrification, au moins un second senseur de température mesurant une température du fluide au sein du circuit de lubrification, au moins un bouchon magnétique agencé sur le carter, au moins un tachymètre mesurant - directement ou indirectement - la vitesse de rotation de la partie menante et de la partie menée, au moins un compteur, au moins un chronomètre.

Cette méthode de surveillance selon l'invention peut de plus comporter une ou plusieurs des caractéristiques qui suivent, prises seules ou en combinaison.

Selon une possibilité, pour au moins un des paramètres, les acquisitions d'une valeur évaluée de ce paramètre comportent les sous-étapes suivantes :
- mesure d'une valeur mesurée du paramètre,
- détermination de la valeur évaluée à partir de la valeur mesurée, la valeur évaluée étant égale à la valeur mesurée, à une intégration temporelle ou à une dérivée temporelle de la valeur mesurée, à une fréquence, une largeur de bande ou une amplitude associées à la valeur mesurée, à une valeur minimale ou maximale de la valeur mesurée.

De la sorte, le calculateur principal reçoit un signal de mesure, porteur de la valeur mesurée, et applique, en fonction du paramètre, une transformation à la valeur mesurée pour obtenir la valeur évaluée. Cette transformation permet d'avoir une valeur évaluée exploitable de façon fiable et précise pour être comparée à la ou les limites associées.

Le calculateur principal peut comporter une mémoire ou être relié à une mémoire, apte à stocker les valeurs mesurées successivement.

Selon un exemple, la valeur évaluée est égale à la valeur minimale ou la valeur maximale parmi ces valeurs mesurées.

Selon un autre exemple, les valeurs mesurées stockées peuvent être utilisées pour extraire de façon connue une fréquence caractéristique ainsi qu'une largeur de bande et une amplitude associées à cette fréquence. La valeur évaluée peut alors être égale à cette fréquence caractéristique, cette largeur de bande ou cette une amplitude.

Les valeurs évaluées déterminées successivement peuvent également être stockées dans la mémoire.

Selon une possibilité compatible avec les précédentes, ladite au moins une limite d'au moins un des paramètres peut comporter un seuil limite ou une fonction limite, le seuil limite étant comparé à la dernière valeur évaluée de ce paramètre, la fonction limite étant comparée aux valeurs évaluées successives de ce paramètre pendant un temps prédéterminé, cette émission d'une alerte étant effectuée si le seuil limite ou la fonction limite est dépassée.

De la sorte, la méthode de surveillance selon l'invention permet avantageusement d'avoir un niveau d'alerte indiquant une usure de la roue libre, voire un dysfonctionnement de la roue libre.

Lorsque ladite au moins une limite d'un paramètre comporte un seuil limite, la valeur évaluée de ce paramètre est considérée comme dépassant la limite correspondante lorsque la dernière valeur évaluée est supérieure au seuil limite de cette limite.

Lorsque ladite au moins une limite d'un paramètre comporte une fonction limite, la valeur évaluée de ce paramètre peut être considérée comme dépassant la limite correspondante lorsqu'au moins une valeur évaluée de ce paramètre parmi les valeurs évaluées pendant le temps prédéterminé s'écarte de la fonction limite d'un écart supérieur à un premier seuil d'écart ou lorsque ces valeurs évaluées s'écartent de la fonction limite d'un écart supérieur à un second seuil d'écart pendant une durée de comparaison inférieure au temps prédéterminé, le premier seuil d'écart étant supérieur au second seuil d'écart.

Le nombre de valeurs évaluées suffisant pour que la limite soit considérée comme dépassée dépend notamment du paramètre considéré, mais peut également dépendre de l'échantillonnage de ces valeurs évaluées.

Ainsi, dans certains cas d'échantillonnage et/ou pour certains paramètres, une seule valeur évaluée est suffisante pour considérer que cette limite est dépassée.

Alternativement, dans d'autres cas d'échantillonnage ou pour d'autres paramètres, deux ou trois valeurs évaluées de ce paramètre peuvent par exemple être nécessaires pour considérer que la limite est dépassée.

Pour certains paramètres, cet écart peut être unilatéral par rapport à la fonction limite. Ainsi, uniquement la ou les valeurs évaluées situées d'un seul côté de la fonction limite, et par exemple étant supérieures à cette fonction limite, sont prises en compte pour être comparées aux premier et second seuils d'écart. Les valeurs évaluées situées de l'autre côté de la fonction limite, et par exemple étant inférieures à cette fonction limite, ne sont pas prises en compte pour être comparées aux premier et second seuils d'écart.

Pour d'autres paramètres, l'écart peut être bilatéral par rapport à la fonction limite. Ainsi, la ou les valeurs évaluées situées de part et d'autre de la fonction limite, et donc aussi bien supérieures qu'inférieures à cette fonction limite, sont prises en compte pour être comparées aux premier et second seuils d'écart.

Dans ce cas, la méthode de surveillance selon l'invention permet avantageusement d'analyser et de comparer les valeurs évaluées et leurs variations sur le temps déterminé afin d'optimiser la surveillance de l'usure de la roue libre et de ses conséquences.

Alternativement, ladite au moins une limite d'au moins un des paramètres peut comporter deux seuils limites ou deux fonctions limites, l'émission d'une alerte comportant une émission d'une première alerte si uniquement un seul des seuils limites ou une seule des fonctions limites est dépassé et d'une seconde alerte si les deux seuils limites ou les deux fonctions limites sont dépassés, les deux seuils limites étant comparés à la dernière valeur évaluée de ce paramètre, les fonctions limites étant comparées aux valeurs évaluées successives de ce paramètre pendant le temps prédéterminé.

Dans ce cas, la méthode de surveillance selon l'invention permet avantageusement d'avoir deux niveaux d'alertes distincts afin d'optimiser la détection de l'usure de la roue libre et de ses conséquences. La première alerte indique par exemple un risque modéré lié à un premier niveau d'usure de la roue libre et la seconde alerte indique par exemple un risque plus important lié à un second niveau d'usure plus important de la roue libre.

Selon une possibilité compatible avec les précédentes, la méthode de surveillance selon l'invention peut comporter une détermination de ladite au moins une limite avec une roue libre neuve ou après une durée initiale prédéterminée d'utilisation de la roue libre.

De la sorte, la ou les limites peuvent être déterminées dans un premier temps sur un banc d'essai, voire une fois installée sur une machine ou une installation motrice, la roue libre étant à l'état neuf.

La ou les limites peuvent être alternativement déterminées après rodage de la roue libre, après une durée initiale prédéterminée d'utilisation. La durée initiale prédéterminée d'utilisation peut être égale à une ou plusieurs dizaines d'heures, par exemple 100 heures. Lorsque la roue libre équipe une installation motrice d'un aéronef, la durée initiale prédéterminée d'utilisation peut être une durée de vol.

La méthode de surveillance selon l'invention permet ainsi de déterminer une limite correspondant au comportement réel de la roue libre à surveiller, ce qui contribue à optimiser cette surveillance.

Selon une possibilité compatible avec les précédentes, pour au moins un des paramètres, la détermination de ladite au moins une limite peut être effectuée dans différentes phases de fonctionnement de la roue libre parmi :
- une phase engagée de la roue libre, la roue libre étant dans un état engagé,
- une phase désengagée de la roue libre, la roue libre étant dans un état désengagé,
- une phase d'engagement de la roue libre, et
- une phase de désengagement de la roue libre,
pour chaque paramètre, des limites spécifiques associées respectivement aux phases de fonctionnement étant établies.

De la sorte, pour un ou plusieurs des paramètres, une ou plusieurs limites peuvent être définies et adaptées spécifiquement à chacune de ces phases de fonctionnement de la roue libre. En effet, les caractéristiques d'un ou de plusieurs paramètres peuvent varier de façon significative entre ces différentes phases de fonctionnement de la roue libre. Adapter ainsi la ou les limites associées à ce ou ces paramètres en fonction de ces différentes phases de fonctionnement de la roue libre permet ainsi d'optimiser la surveillance de la roue libre.

La détection d'une usure importante, voire d'une dégradation ou d'un dysfonctionnement, de la roue libre peut ainsi être améliorée voire anticipée.

Par exemple, la ou les limites associées au signal vibratoire déterminé à l'aide de l'accéléromètre peuvent être spécifiques et donc différentes pour les phases de fonctionnement de la roue libre. En effet, pour la phase engagée, la limite peut être moins importante que lors de la phase d'engagement pour laquelle un « choc au contact » peut être toléré.

Selon un autre exemple, la ou les limites associées à la première température de la peau du carter et/ou de la seconde température du fluide circulant au sein du circuit de lubrification peuvent être spécifiques et donc différentes pour les phases de fonctionnement de la roue libre. En effet, pour la phase désengagée, ces températures peuvent augmenter fortement à cause de la rotation à haute vitesse des galets de la roue libre sur les rampes, alors que ces températures restent plus faibles pour les autres phases de fonctionnement.

Ces limites sont également dépendantes du type de roue libre, voire de la technologie de lubrification utilisée.

Alternativement ou de façon complémentaire, pour un ou plusieurs des paramètres, la ou les limites peuvent être identiques pour plusieurs, voire pour toutes les phases de fonctionnement de la roue libre.

Par exemple, la ou les limites associées à une quantité de limaille captée dans le fluide par le bouchon magnétique et la ou les limites associées à une pression du fluide circulant au sein du circuit de lubrification peuvent être identiques pour toutes ces phases de fonctionnement de la roue libre.

De façon complémentaire ou alternative, ces phases de fonctionnement peuvent comporter une phase de démarrage d'un moteur entraînant la roue libre et une phase d'arrêt de ce moteur.

Ces phases de démarrage et d'arrêt du moteur incluent respectivement les phases d'engagement et de désengagement de la roue libre. Dès lors, les phases de démarrage et d'arrêt du moteur peuvent par exemple être prises en compte en remplacement des phases d'engagement et de désengagement de la roue libre. Ces phases de démarrage et d'arrêt du moteur peuvent permettre de prendre en compte l'accélération et la décélération appliquées par le moteur à la roue libre.

Par ailleurs, pour au moins un des paramètres, la détermination de ladite au moins une limite peut comporter une définition de chaque fonction limite de ce paramètre à l'aide dudit au moins un des senseurs, cette définition comprenant les sous-étapes suivantes :
- détermination de mesures initiales successives du paramètre à l'aide du senseur,
- traitement des mesures initiales pour obtenir des valeurs initiales successives, les valeurs initiales pouvant être égales aux mesures initiales du paramètre ainsi qu'à des intégrations temporelles ou à des dérivées temporelles des mesures initiales, et
- établissement de la fonction limite en fonction des valeurs initiales successives.

De la sorte, pour un ou plusieurs des paramètres, une ou plusieurs limites peuvent être définies et adaptées spécifiquement à chacune de ces phases de fonctionnement de la roue libre. En effet, les caractéristiques d'un ou de plusieurs paramètres peuvent varier de façon significative entre ces différentes phases de fonctionnement de la roue libre. Adapter ainsi la ou les limites associées à ce ou ces paramètres en fonction de ces différentes phases de fonctionnement de la roue libre permet ainsi d'optimiser la surveillance de la roue libre et d'améliorer et anticiper la détection d'une usure importante, voire d'une dégradation ou d'un dysfonctionnement de la roue libre.

Selon une possibilité compatible avec les précédentes, pour au moins un des paramètres, les acquisitions successives peuvent être effectuées dans ces différentes phases de fonctionnement de la roue libre parmi :
- une phase engagée de la roue libre, la roue libre étant dans un état engagé,
- une phase désengagée de la roue libre, la roue libre étant dans un état désengagé,
- une phase d'engagement de la roue libre,
- une phase de désengagement de la roue libre,
pour chaque paramètre, des limites spécifiques étant associées respectivement aux phases de fonctionnement.

En effet, les caractéristiques d'un ou de plusieurs paramètres peuvent varier de façon significative entre ces différentes phases de fonctionnement de la roue libre. Dès lors, adapter la ou les limites associées à un ou plusieurs de ces paramètres en fonction de ces différentes phases de fonctionnement de la roue libre permet d'optimiser la surveillance de la roue libre et d'améliorer et anticiper la détection d'une usure importante, voire d'une dégradation ou d'un dysfonctionnement de la roue libre.

Alternativement ou de façon complémentaire, pour un ou plusieurs paramètres, la ou les limites peuvent être identiques pour plusieurs, voire pour toutes les phases de fonctionnement de la roue libre.

Comme pour la détermination de ladite au moins une limite, ces phases de fonctionnement peuvent comporter, de façon complémentaire ou alternative, une phase de démarrage d'un moteur entraînant la roue libre et une phase d'arrêt de ce moteur. Dès lors, les phases de démarrage et d'arrêt du moteur peuvent par exemple être prises en compte en remplacement des phases d'engagement et de désengagement de la roue libre. Ces phases de démarrage et d'arrêt du moteur peuvent permettre de prendre en compte l'accélération et la décélération appliquées par le moteur à la roue libre.

Selon une possibilité compatible avec les précédentes, la ou les limites peuvent encore être déterminées en fonction d'au moins un paramètre indépendant de la roue libre, choisi parmi au moins un paramètre atmosphérique et au moins un paramètre de vol d'un aéronef équipé de la roue libre, comportant par exemple la vitesse d'avancement de l'aéronef.

Cet au moins un paramètre atmosphérique peut par exemple comporter une température atmosphérique, une pression atmosphérique et/ou une altitude de l'aéronef. Cet au moins un paramètre de vol de l'aéronef peut quant à lui comporter la vitesse d'avancement de l'aéronef, la vitesse de rotation d'au moins un de ses rotors, son attitude, à savoir ses angles de roulis et de tangage, et/ou la puissance fournie par le ou les moteurs de l'aéronef.

Ainsi, la ou les limites peuvent variées en fonction d'un ou de plusieurs de ces paramètres indépendants de la roue libre, chaque limite étant calculée selon une loi stockée dans une mémoire et appliquée par le calculateur principal, cette loi étant fonction de ce ou ces paramètres indépendants de la roue libre. Une telle loi peut par exemple être établie par essais et/ou simulations.

De la sorte, la méthode de surveillance selon l'invention permet avantageusement d'adapter la ou les limites en fonction d'un ou de plusieurs de ces paramètres indépendants de la roue libre. Cette caractéristique permet d'optimiser les limites pour optimiser la surveillance de la roue libre.

La présente invention a aussi pour objet une méthode de contrôle d'une installation motrice muni d'une roue libre.

Une telle installation motrice comprend au moins deux roues libres et au moins deux moteurs pour mettre en mouvement un système mécanique, chaque roue libre étant reliée à un arbre moteur d'un seul des moteurs et au système mécanique. Lesdits au moins deux moteurs sont configurés pour fonctionner sur requête selon un mode de fonctionnement collaboratif durant lequel les deux moteurs développent chacun une puissance motrice non nulle et un mode de fonctionnement asymétrique durant lequel au moins un des moteurs est actif en développant une puissance motrice et au moins un des moteurs est en veille en ne transmettant pas une puissance motrice.

Le système mécanique peut être un rotor, relié aux moteurs via une chaîne cinématique de transmission de puissance, telle une boîte de transmission mécanique. Cette installation motrice peut équiper en particulier un aéronef, voire un giravion.

Cette méthode de contrôle peut comporter :
- une surveillance de chaque roue libre en appliquant la méthode de surveillance d'une roue libre précédemment décrit, dans le cas où ladite au moins une limite d'au moins un desdits paramètres comporte un unique seuil limite ou une unique fonction limite,
- une sortie automatique du mode de fonctionnement asymétrique effectuée lors de ce mode de fonctionnement asymétrique et suite à l'émission de l'alerte, la sortie du mode de fonctionnement asymétrique comportant une réactivation dudit au moins un moteur en veille, et
- une étape de maintien automatique dans le mode de fonctionnement collaboratif effectuée lors de ce mode de fonctionnement collaboratif et suite à l'émission de l'alerte, cette étape de maintien automatique dans ce mode de fonctionnement collaboratif empêchant une mise en veille des moteurs actifs.

Ainsi, lors de l'émission de l'alerte alors que l'installation motrice est dans le mode de fonctionnement asymétrique, le ou les moteurs en veille sont réactivés automatiquement de sorte à fournir une puissance motrice non nulle au système mécanique, l'installation fonctionnant alors dans le mode de fonctionnement collaboratif. Dans ce cas, le calculateur principal peut par exemple envoyer un signal de sortie du mode de fonctionnement asymétrique à un contrôleur qui applique des instructions pour autoriser ou interdire la mise en œuvre du mode de fonctionnement asymétrique. Un tel contrôleur peut par exemple prendre la forme d'un calculateur moteur pilotant un des moteurs et/ou d'un calculateur en communication avec les calculateurs moteurs.

La réactivation d'un moteur en veille consiste en un démarrage de ce moteur si sa chambre de combustion est éteinte ou en une relance de ce moteur si ce moteur fonctionne à un régime de ralenti ou de super-ralenti.

L'étape de maintien automatique dans le mode de fonctionnement collaboratif empêche quant à elle une mise en veille des moteurs actifs. Ainsi lorsqu'une alerte est émise alors que l'installation fonctionne dans le mode de fonctionnement collaboratif, toute demande d'entrer dans le mode de fonctionnement asymétrique sera sans effet, ce mode de fonctionnement asymétrique étant incompatible avec cette alerte et donc interdit. La mise en veille d'un moteur actif est donc impossible et interdite par le calculateur principal qui peut par exemple envoyer un signal d'interdiction de mise en veille au contrôleur.

Cette méthode de contrôle permet ainsi d'autoriser ou d'imposer une sortie du mode de fonctionnement asymétrique de l'installation motrice, voire d'interdire ce mode de fonctionnement asymétrique, en fonction des valeurs évaluées de paramètres, correspondant estimant par exemple un niveau d'usure de la roue libre, afin de préserver cette roue libre.

De façon complémentaire, la méthode selon l'invention peut comporter une étape d'inhibition du mode de fonctionnement collaboratif effectuée lors de ce mode de fonctionnement asymétrique et, suite à l'émission de l'alerte, ou de la seconde alerte le cas échéant, cette alerte ou cette seconde alerte étant relative à la différence de vitesse de rotation entre la partie menante et la partie menée de la roue libre. Cette étape d'inhibition du mode de fonctionnement collaboratif oblige ainsi l'installation motrice à rester en mode de fonctionnement asymétrique, notamment suite à une détection d'un dysfonctionnement majeur sur la roue libre, par exemple un risque de glissement important susceptible d'empêcher un engagement de la roue libre. En effet, essayer de réengager une roue libre très détériorée voire plus fonctionnelle, sujet notamment à un glissement permanent peut potentiellement provoquer une surchauffe de la roue libre, des a coups sévères et/ou erratiques dans la roue libre susceptibles de générer un endommagement, voire une rupture dans la chaîne cinématique situé en aval de la roue libre, un risque de survitesse du moteur thermique ou de détérioration de ses aubes.

Il est alors préférable d'inhiber le redémarrage du moteur en veille et d'imposer de rester en mode de fonctionnement asymétrique pendant le reste du vol, en appliquant les limitations du domaine de vol associées au mode de fonctionnement dit « OEI » pour la désignation en langue anglaise « One Engine Inoperative ». Cette inhibition du mode de fonctionnement collaboratif peut avoir des conséquences importantes, notamment des limitations du domaine de vol et des marges de sécurité ainsi qu'un risque de posé dur lors de l'atterrissage, correspondant au mode de fonctionnement OEI.

Cette méthode de contrôle peut éventuellement permettre de surveiller le fonctionnement du moteur associé, par exemple en surveillant le passage de la roue libre du mode désengagé au mode engagé à la suite de la réactivation d'un moteur en veille. Un calculateur peut détecter un dysfonctionnement du moteur en veille si la roue libre ne passe du mode désengagé au mode engagé à la suite de la réactivation de ce moteur en veille.

De façon alternative, lorsque ladite au moins une limite comporte deux seuils limites ou deux fonctions limites, une telle méthode de contrôle peut comporter :
- une surveillance de chaque roue libre en appliquant la méthode de surveillance d'une roue libre précédemment décrit, dans le cas où ladite au moins une limite d'au moins un desdits paramètres comporte deux seuils limites ou deux fonctions limites,
- une sortie automatique du mode de fonctionnement asymétrique effectuée lors de ce mode de fonctionnement asymétrique et suite à l'émission de la seconde alerte, la sortie du mode de fonctionnement asymétrique comportant une réactivation dudit au moins un moteur en veille, et
- une étape de maintien automatique dans le mode de fonctionnement collaboratif effectuée lors de ce mode de fonctionnement collaboratif et suite à l'émission de la première alerte ou de la seconde alerte, cette étape de maintien automatique dans ce mode de fonctionnement collaboratif empêchant une mise en veille des moteurs actifs, et
- une étape de restriction du mode de fonctionnement asymétrique effectuée lors de ce mode de fonctionnement asymétrique et suite à l'émission de la première alerte, cette étape de restriction autorisant un maintien en veille dudit au moins un moteur en veille pendant une durée prédéterminée, puis une réactivation automatique dudit au moins un moteur en veille étant effectuée automatiquement à la fin de la durée prédéterminée.

La sortie automatique du mode de fonctionnement asymétrique et l'étape de maintien automatique dans le mode de fonctionnement collaboratif sont similaires à celles décrites précédemment.

Les différences concernent le déclenchement de ces étapes, la sortie automatique du mode de fonctionnement asymétrique étant réalisée suite à l'émission de la seconde alerte, à savoir lorsque les deux seuils limites ou les deux fonctions limites sont dépassés, alors que l'étape de maintien automatique dans le mode de fonctionnement collaboratif est réalisée suite à l'émission de la première ou seconde alerte, à savoir dès qu'un des seuils limites ou une des fonctions limites est dépassé.

De plus, lors de l'émission de la première alerte, l'étape de restriction limite le temps d'utilisation du mode de fonctionnement asymétrique à la durée prédéterminée, et donc le maintien en veille dudit ou des moteurs en veille, ce ou ces moteurs étant réactivés automatiquement à la fin de la durée prédéterminée. Cette durée prédéterminée peut être de l'ordre de plusieurs minutes, voire de plusieurs dizaines de minutes.

Comme précédemment, cette méthode de contrôle permet donc d'autoriser ou d'imposer une sortie du mode de fonctionnement asymétrique de l'installation motrice, voire d'interdire ce mode de fonctionnement asymétrique, afin de préserver cette roue libre.

De plus, lorsque la première alerte est émise alors que l'installation motrice fonctionne dans le mode de fonctionnement asymétrique, l'état de la roue libre permet de maintenir en veille chaque moteur en veille pendant une durée prédéterminée, mais il sera automatiquement réactivé dès que la durée prédéterminée sera atteinte.

Cette caractéristique permet ainsi d'optimiser le temps d'utilisation du mode de fonctionnement asymétrique sans dégrader la roue libre.

De plus, lorsque l'installation motrice équipe un aéronef, la méthode de contrôle peut comporter une étape de limitation d'une vitesse de vol d'avancement de l'aéronef, ou d'un couple du moteur entraînant la roue libre pour laquelle la valeur évaluée dépasse sa limite, effectuée suite l'émission de l'alerte, lorsque ladite au moins une limite d'au moins un desdits paramètres comporte un unique seuil limite ou une unique fonction limite, indépendamment du mode de fonctionnement de l'aéronef. Dans ce cas, le calculateur principal peut transmettre un signal de limitation à un contrôleur pilotant lesdits au moins deux moteurs afin que la vitesse de vol d'avancement de l'aéronef reste inférieure ou égale à une vitesse limite par exemple égale à une vitesse de croisière associée à un niveau de puissance minimum. De la sorte, la sollicitation de la roue libre reste limitée évitant une dégradation supplémentaire de cette roue libre pendant la fin de la mission.

La méthode de contrôle peut également comporter une telle étape de limitation d'une vitesse de vol d'avancement de l'aéronef ou d'un couple d'un moteur, effectuée suite l'émission de la seconde alerte, lorsque ladite au moins une limite d'au moins un desdits paramètres comporte deux seuils limites ou deux fonctions limites.

La méthode de contrôle selon l'invention permet ainsi de limiter, suite à l'émission de l'alerte, ou la seconde alerte le cas échéant, la sollicitation de la roue libre, jusqu'à l'atterrissage de l'aéronef afin de limiter le risque d'une dégradation plus importante de la roue libre.

De façon alternative, un message spécifique peut être associé à l'émission de l'alerte, ou de la seconde alerte le cas échéant, et destinée à un pilote de l'aéronef pour par exemple lui donner des instructions spécifiques. Par exemple, un tel message peut imposer des conditions de vols particulières, restreignant éventuellement le domaine de vol de l'aéronef, de sorte à limiter les sollicitations de la roue libre. Un tel message peut imposer d'écourter la mission et de retourner à la base en préconisant la réalisation d'une opération de maintenance de la roue libre.

En outre, les valeurs évaluées peuvent être transmises en cours de vol, ou une fois l'aéronef de retour à sa base à un calculateur centralisé sur la base. Ces valeurs évaluées peuvent alors être analysées et exploitées pour optimiser les opérations de maintenance de la roue libre.

La présente invention a encore pour objet une installation motrice munie d'une telle roue libre.

Cette installation motrice comprend au moins un moteur pour mettre en mouvement un système mécanique. Cette installation motrice comporte une roue libre par moteur pour transmettre une puissance générée par ledit au moins un moteur, chaque roue libre étant reliée à un arbre moteur d'un dudit au moins un moteur et au système mécanique. La roue libre est agencée dans un carter, la roue libre comprenant une partie menante et une partie menée agencées au moins dans un volume interne INT délimité par le carter. Un circuit de lubrification lubrifie la roue libre dans le carter, plusieurs senseurs surveillant le fonctionnement de la roue libre.

De plus, l'installation motrice comporte un calculateur principal pour mettre en œuvre la méthode de surveillance de la roue libre précédemment décrite.

La partie menante de la roue libre peut être connectée à un arbre moteur d'un moteur et sa partie menée peut être connectée à une liaison mécanique qui est connectée au système mécanique.

Alternativement, la partie menante peut être connectée à une liaison mécanique qui est connectée à un arbre moteur d'un moteur et la partie menée peut être connectée à une entrée d'une boîte de transmission de puissance.

Alternativement, un arbre moteur d'un moteur peut être connecté à une liaison mécanique qui peut être connectée au système mécanique, la roue libre étant logé de manière amovible dans le système mécanique et, par exemple dans une boîte de transmission de puissance.

De la sorte, l'installation motrice peut optimiser son fonctionnement en surveillant de façon continue le fonctionnement de la roue libre pour détecter une dégradation de ses performances, une usure voire un dysfonctionnement par exemple.

Eventuellement, une telle installation motrice peut comprendre au moins deux moteurs et une roue libre par moteur, les au moins deux moteurs étant configurés pour fonctionner sur requête selon un mode de fonctionnement collaboratif durant lequel les deux moteurs développent chacun une puissance motrice et un mode de fonctionnement asymétrique durant lequel au moins un moteur est actif en développant une puissance motrice et au moins un moteur est en veille en ne transmettant pas une puissance motrice.

Les roues libres associées respectivement aux moteurs peuvent être différentes, notamment si une logique met toujours en veille le même moteur durant le mode fonctionnement asymétrique.

Le calculateur principal de cette installation motrice peut alors mettre en œuvre la méthode de contrôle de l'installation motrice précédemment décrite.

Ainsi, l'installation motrice peut optimiser son fonctionnement en prenant en compte l'usure de la roue afin d'autoriser ou d'imposer une sortie du mode de fonctionnement asymétrique de l'installation motrice, voire d'interdire ce mode de fonctionnement asymétrique.

La présente invention a enfin pour objet un aéronef équipé d'une telle installation motrice précédemment décrite pour mettre en mouvement un rotor.

L'invention et ses avantages apparaîtront avec plus de détails dans le cadre de la description qui suit avec des exemples donnés à titre illustratif en référence aux figures annexées qui représentent :
- la figure 1, une installation motrice selon l'invention,
- la figure 2, une méthode de surveillance, selon l'invention, pour surveiller la roue libre de l'installation motrice de la figure 1,
- la figure 3, un graphe d'une fonction limite avec des seuils d'écart unilatéraux,
- la figure 4, un graphe d'une fonction limite avec des seuils d'écart bilatéraux,
- la figure 5, un graphe représentant une courbe de variation de la vitesse de rotation de la partie menante de la roue libre,
- la figure 6, des évolutions d'une partie de la courbe de la figure 5,
- la figure 7, une installation motrice selon l'invention comportant au moins deux moteurs et au moins deux roues libres, et
- la figure 8, une méthode de contrôle, selon l'invention, pour contrôler l'installation motrice de la figure 7.

Les éléments présents dans plusieurs figures distinctes sont affectés d'une seule et même référence.

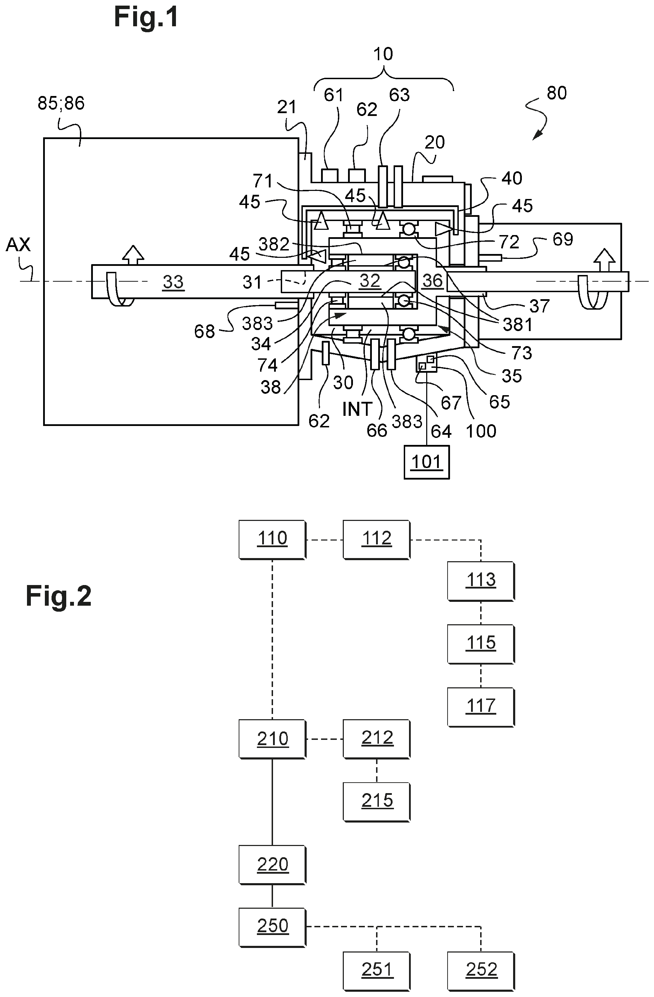

La figure 1 présente une installation motrice 80 selon l'invention, cette installation motrice 80 étant munie d'au moins un moteur 85 et d'au moins une roue libre 30 pour mettre en mouvement un système mécanique 94. La référence 85 désigne n'importe quel moteur, les références 86, 87 désignant des moteurs particuliers si besoin.

Cette installation motrice 80 peut par exemple équiper un aéronef 99, en particulier un giravion, et le système mécanique 94 peut être un rotor comprenant une pluralité de pales pour agir sur le déplacement de l'aéronef 99. Un tel rotor peut par exemple assurer au moins partiellement la sustentation et/ou la propulsion de l'aéronef 99.

Indépendamment de ces aspects, l'installation motrice 80 comporte une roue libre 30 par moteur 85. Pour chaque moteur 85, la roue libre 30 permet de transmettre une puissance motrice générée par ce moteur 85, à destination du système mécanique 94, éventuellement via une liaison mécanique 95.

La roue libre 30 est implantée au sein d'un carter 20 délimitant un volume interne INT. A cet effet, le carter 20 peut comprendre une ou des parois formant une enceinte. Une des parois peut former un couvercle démontable pour accéder à la roue libre 30. Au moins une paroi peut faire partie intégrante d'un autre équipement de l'aéronef 99.

La roue libre 30 est logée au moins partiellement dans le carter 20. La roue libre 30 comprend une partie menante 31 et une partie menée 35. La partie menante 31 comporte un ou plusieurs éléments solidaires en rotation autour d'un axe de rotation AX, et la partie menée 35 comporte aussi un ou plusieurs éléments solidaires en rotation autour de l'axe de rotation AX.

La partie menante 31 et la partie menée 35 sont en outre logées au moins partiellement dans le carter 20. Par exemple, la partie menante 31 comporte un premier tronçon menant 32 disposé dans le volume interne INT et un deuxième tronçon menant 33 qui sort du carter 20. De même, la partie menée 35 peut comporter un premier tronçon mené 36 disposé dans le volume interne INT et un deuxième tronçon mené 37 qui sort du carter 20. En outre, la partie menante 31 peut être située au moins partiellement dans la partie menée 35 selon l'exemple de la figure 1, ou la partie menée 35 peut être située au moins partiellement dans la partie menante 31.

Par ailleurs, de manière usuelle la roue libre 30 comporte au moins un dispositif de liaison 38 pour désolidariser la partie menante 31 et la partie menée 35 durant un mode désengagé lorsque la partie menée 35 a une vitesse de rotation supérieure à une vitesse de rotation de la partie menante 31, et pour lier la partie menante 31 et la partie menée 35 durant un mode engagé dans le cas contraire. Le dispositif de liaison 38 peut comprendre un dispositif à osselets, ou des rampes et des rouleaux, un système à cliquets, ou autres. Selon l'exemple illustré, le premier tronçon menant 32 comporte des rampes 381 et le premier tronçon mené 36 comporte une face cylindrique 382 en vis-à-vis des rampes 381, le ou les dispositifs de liaison 38 comportant des rouleaux 383 par exemple.

Selon l'exemple représenté sur la figure 1, la roue libre 30 et le carter 20 peuvent former un boîtier instrumenté 10 comportant au moins un palier 71, 72, 73, 74 agencé dans le volume interne INT pour guider la roue libre 30 en rotation autour de l'axe de rotation AX.

Cette roue libre 30 peut être intégrée dans un boîtier instrumenté 10. On peut se reporter au document de priorité FR 2506175, qui comporte une description détaillée de la roue libre 30 et du boîtier instrumenté 10.

Par ailleurs, le boîtier instrumenté 10 peut comporter au moins un circuit de lubrification 40 pour lubrifier la roue libre 30 dans le carter 20, voire par exemple le ou les dispositifs de liaison 38 et/ou les paliers 71, 72, 73, 74.

Le boîtier instrumenté 10 peut encore comprendre plusieurs senseurs 60 pour surveiller le fonctionnement de la roue libre 30.

Par « senseur », on entend ici un capteur physique capable de mesurer directement le paramètre en question mais aussi un système pouvant comprendre un ou plusieurs capteurs physiques ainsi que des moyens de traitement du signal permettant de fournir une estimation du paramètre à partir des mesures brutes fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

Chaque senseur 60 peut être en liaison avec un calculateur principal 100, par exemple porté par le carter 20 ou déporté en dehors du carter 20. Le calculateur principal 100 peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

Les valeurs mesurées par chaque senseur 60, et transmises au calculateur principal 100, peuvent être stockées dans une mémoire du calculateur principal 100 ou reliée à lui.

Le calculateur principal 100 peut de plus communiquer, via une liaison filaire ou non filaire, avec un alerteur 101, fixé au carter 20 ou déporté. Un tel alerteur 101 peut comprendre un système générant une ou des alertes audibles, un système haptique, un afficheur générant un ou des alertes textuels ou visuels.

La figure 2 illustre une méthode de surveillance de la roue libre 30. Le calculateur principal 100 peut mettre en œuvre cette méthode de surveillance à l'aide d'instructions, par exemple d'un programme d'ordinateur, stockées dans une mémoire de ce calculateur principal 100 ou reliée à lui.

La méthode comprend plusieurs étapes réalisées de manière répétées.

Tout d'abord, des acquisitions 210 de valeurs évaluées de plusieurs paramètres sont réalisées à l'aide des senseurs 60.

Les acquisitions 210 de valeurs évaluées de plusieurs paramètres peuvent être réalisées de façon sensiblement continue, par exemple par intervalles prédéterminés d'échantillonnage, au cours du fonctionnement de la roue libre 30, les senseurs 60 émettant les signaux de mesure à destination du calculateur principal 100.

Les valeurs évaluées de ces paramètres peuvent être stockées dans une mémoire du calculateur principal 100 ou une mémoire reliée à ce calculateur principal 100.

Pour au moins un de ces paramètres, les acquisitions 210 peuvent éventuellement comporter les sous-étapes suivantes :
- mesure 212 d'une valeur mesurée du paramètre, à l'aide d'au moins un senseur 60, et
- détermination 215 de la valeur évaluée à partir de la valeur mesurée.

La valeur évaluée peut être égale à la valeur mesurée ou obtenue à l'aide d'une transformation de la valeur mesurée.

La transformation de la valeur mesurée peut comprendre le calcul d'une intégration temporelle ou d'une dérivée temporelle relative à la dernière valeur mesurée, en utilisant les valeurs mesurées stockées dans la mémoire, la valeur évaluée étant égale à cette intégration ou dérivée temporelle.

La transformation de la valeur mesurée peut comprendre la détermination d'une valeur extrême parmi les valeurs mesurées stockées dans la mémoire, la valeur évaluée étant égale à la valeur minimale ou à la valeur maximale parmi ces valeurs mesurées.

La transformation de la valeur mesurée peut comprendre l'extraction d'une fréquence caractéristique, d'une largeur de bande et/ou d'une amplitude associées à cette fréquence, la valeur évaluée étant égale à cette fréquence caractéristique, cette largeur de bande ou cette amplitude. Le calculateur principal 100 peut par exemple mettre en œuvre une transformation de Fourier ou tout autre méthode d'extraction spectrale lors de cette transformation.

De plus, chaque valeur mesurée peut être filtrée de façon connue, par exemple par un filtre passe-bas, un filtre passe-haut ou tout autre filtre, pour retirer notamment un bruit de mesure. Ce filtrage peut être fait par le calculateur principal 100 ou par un calculateur secondaire intégré au senseur 60 concerné.

Ensuite, la méthode de surveillance comporte, pour chaque paramètre, une comparaison 220 d'au moins une des valeurs évaluées de ce paramètre avec au moins une limite respective effectuée par le calculateur principal 100.

Pour un ou plusieurs paramètres, la valeur évaluée peut ainsi être comparée à un unique seuil limite, la limite associée au paramètre concerné comportant uniquement ce seuil limite. Ce seuil limite est dans cas comparé à la dernière valeur évaluée de ce paramètre.

Pour un ou plusieurs paramètres, la valeur évaluée peut être comparée à une unique fonction limite, la limite associée au paramètre concerné comportant uniquement cette fonction limite. Dans ce cas, la fonction limite est comparée aux valeurs évaluées successives de ce paramètre pendant un temps prédéterminé et stockées dans la mémoire.

De façon alternative ou complémentaire, pour un ou plusieurs paramètres, la valeur évaluée peut être comparé à deux seuils limites distincts, la limite associée au paramètre concerné comportant uniquement ces deux seuils limites. Ces seuils limites sont dans ce cas comparés à la dernière valeur évaluée de ce paramètre.

Pour un ou plusieurs paramètres, la valeur évaluée peut être comparée à deux fonctions limites, la limite associée au paramètre concerné comportant uniquement ces deux fonctions limites. Dans ce cas, ces deux fonctions limites sont comparées aux valeurs évaluées successives de ce paramètre pendant un temps prédéterminé et stockées dans la mémoire.

Dans le cas où la limite associée à un paramètre comporte une ou deux fonctions limites FL, une telle fonction limite FL est considérée comme étant dépassée lorsque qu'au moins une valeur évaluée de ce paramètre s'écarte de la fonction limite FL d'un écart supérieur à un premier seuil d'écart E1 ou lorsque les valeurs évaluées s'écartent de la fonction limite FL d'un écart supérieur à un second seuil d'écart E2 pendant une durée de comparaison inférieure au temps prédéterminé, le premier seuil d'écart E1 étant supérieur au second seuil d'écart E2.

De la sorte, une ou plusieurs valeurs évaluées, d'un paramètre s'écartant de la fonction limite d'un écart supérieur au premier seuil d'écart, peuvent être nécessaires en fonction notamment du paramètre considéré, voire de l'échantillonnage de ces valeurs évaluées.

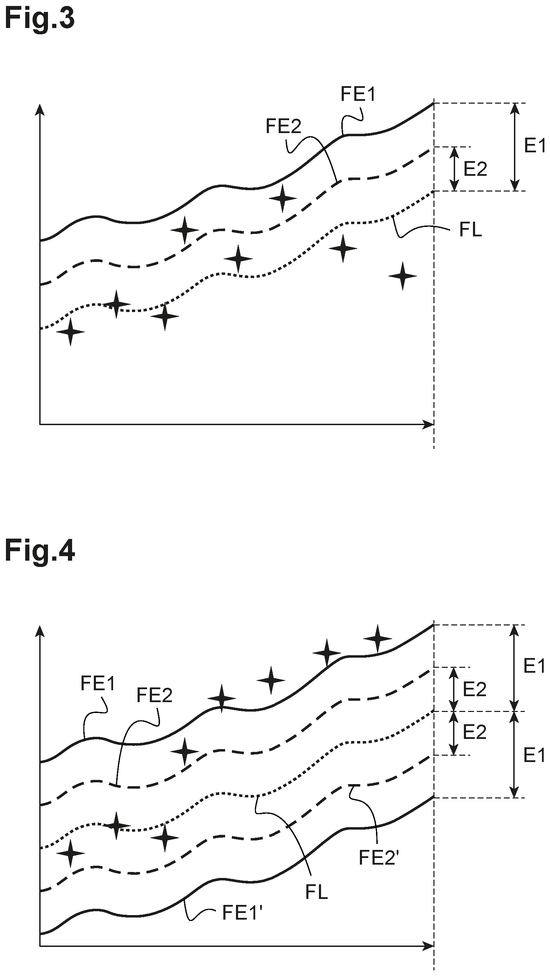

Les figures 3 et 4 représentent une fonction limite FL ainsi que des courbes d'écart FE1,FE1',FE2,FE2', le temps étant en abscisse et la valeur évaluée du paramètre en ordonnée.

Selon la figure 3, uniquement la ou les valeurs évaluées situées d'un seul côté de la fonction limite FL, et par exemple supérieures à cette fonction limite FL, sont prises en compte pour être comparées aux premier et second seuils d'écart E1,E2, à l'aide des courbes d'écart FE1,FE2. Selon cette figure 3, aucune valeur évaluée ne s'écarte de la fonction limite FL d'une valeur supérieure au premier seuil d'écart E1, et deux valeurs évaluées non consécutives s'écartent de cette fonction limite FL d'une valeur supérieure au second seuil d'écart E2. Dès lors la limite n'est pas dépassée dans ce cas. Cette figure 3 peut s'appliquer pour certains paramètres, tels que les première et seconde températures.

Selon la figure 4, la ou les valeurs évaluées situées de part et d'autre de la fonction limite FL, et donc aussi bien supérieures qu'inférieures à cette fonction limite FL, sont prises en compte pour être comparées aux premier et second seuils d'écart E1,E2 à l'aide des courbes d'écart FE1,FE1',FE2,FE2'. Selon cette figure 4, quatre valeurs évaluées s'écartent de la fonction limite FL d'une valeur supérieure au premier seuil d'écart E1. Dès lors la limite est considérée comme étant dépassée. Ce cas peut s'appliquer par exemple au signal vibratoire mesuré sur la roue libre 30.

Dans le cas où la limite associée à un paramètre comporte un ou deux seuils limites, un tel seuil limite est considéré comme étant dépassé lorsque la dernière valeur évaluée de ce paramètre est supérieure au seuil limite.

Les paramètres utilisés par la méthode de surveillance selon l'invention peuvent être multiples et mesurés par les senseurs 60.

Ces senseurs 60 peuvent comprendre un ou des accéléromètres 61 permettant de capter un ou des signaux vibratoires subis ou transmis par le carter 20. En effet, le carter 20 est sujet à des vibrations provoquées par la roue libre 30 et ses composants. Dès lors, les signaux vibratoires mesurés avec ce ou ces accéléromètres 61 reflètent le fonctionnement de la roue libre 30. Ces signaux vibratoires permettent de caractériser une signature vibratoire de la roue libre 30. Cette signature vibratoire peut alors être soumise à une logique de contrôle spécifique mémorisée dans une mémoire associée au calculateur principal 100 permettant ainsi de surveiller la roue libre 30.

Par exemple, un écaillage d'un composant de la roue libre 30 peut générer une augmentation continue des vibrations mesurées, et peut ainsi être détecté à l'aide de la méthode de surveillance selon l'invention si la mesure de l'amplitude des vibrations obtenue dépasse une limite d'amplitude. Dans ce cas, le calculateur principal 100 peut générer un signal d'alerte transmis à l'alerteur 101 pour signaler l'écaillage.

De même, ces signaux vibratoires peuvent permettre de détecter des chocs anormaux lors du passage du mode engagé au mode désengagé, et inversement, par exemple via la variation de l'amplitude du choc généré par rapport à une référence mesurée avec une roue libre 30 de référence saine. Un tel choc anormal peut ainsi être détecté à l'aide de la méthode de surveillance selon l'invention si l'amplitude d'un signal de mesure dépasse une limite d'amplitude, et reflète une défaillance de la roue libre 30 ou dans la régulation du moteur 85 associé. Dans ce cas, le calculateur principal 100 peut générer un signal d'alerte transmis à l'alerteur 101 pour signaler le choc détecté.

Eventuellement, ces signaux vibratoires peuvent permettre de détecter des pics ponctuels anormaux dans les mesures effectuées durant le mode engagé, ces pics pouvant résulter d'à-coups ou d'un glissement de la roue libre 30. De même, ces signaux vibratoires peuvent permettre de détecter des pics ponctuels anormaux dans les mesures effectuées durant le mode désengagé, ces pics pouvant résulter d'une lubrification défectueuse ou d'une usure de la roue libre 30 par exemple. La méthode de surveillance selon l'invention permet alors d'analyser ces signaux vibratoires pour détecter de tels pics et générer une alerte en cas de dépassement d'une limite de pic. Dans ce cas, le calculateur principal 100 peut générer un signal d'alerte transmis à l'alerteur 101 pour signaler le dysfonctionnement.

Ces signaux vibratoires peuvent être comparés à un ou deux seuils limites ou à une ou deux fonctions limites.

Les senseurs 60 peuvent comprendre un ou des senseurs de pression 63 mesurant une pression du fluide au sein du circuit de lubrification 40. La méthode de surveillance selon l'invention permet alors de détecter une perte de lubrification partielle en présence d'une pression supérieure à une limite de pression, par exemple due au colmatage d'un asperseur 45, qui n'est habituellement pas détectée, ce qui peut éviter une panne dormante. Dans ce cas, le calculateur principal 100 peut générer un signal d'alerte transmis à l'alerteur 101 pour signaler le dysfonctionnement.

Cette pression du fluide peut être comparée à un ou deux seuils limites ou à une ou deux fonctions limites.

Les senseurs 60 peuvent comprendre un ou des premiers senseurs de température 62 agencés sur le carter 20 et mesurant une première température de la peau du carter 20. La méthode de surveillance selon l'invention permet alors de détecter un échauffement spécifique d'un palier 71-74, situé à proximité de ce premier senseur de température 62 en présence d'une telle première température dépassant une première limite de température. Dans ce cas, le calculateur principal 100 peut générer un signal d'alerte transmis à l'alerteur 101 pour signaler l'échauffement.

Cette première température peut être comparée à un ou deux seuils limites ou à une ou deux fonctions limites.

Les senseurs 60 peuvent comprendre un ou des seconds senseurs de température 64 mesurant une seconde température au sein du circuit de lubrification 40. La méthode de surveillance selon l'invention permet alors de détecter un éventuel échauffement du fluide de lubrification, en présence d'une telle seconde température dépassant une seconde limite de température, lié à une dégradation ou à un problème de lubrification, en particulier si cela est corroboré par la surveillance de la pression d'huile. Dans ce cas, le calculateur principal 100 peut générer un signal d'alerte transmis à l'alerteur 101 pour signaler l'échauffement.

Cette seconde température peut être comparée à un ou deux seuils limites ou à une ou deux fonctions limites.

Les senseurs 60 peuvent comprendre un ou des bouchons magnétiques 66 permettant de capter de la limaille en suspension dans le fluide de lubrification et d'en estimer, de façon connue, la quantité de limailles, en masse ou en volume. Cette limaille résulte d'une usure de la roue libre30 ou d'un palier 71-74. La méthode de surveillance selon l'invention permet alors de détecter, en présence d'une quantité estimée de limaille dépassant une limite de limaille, une usure importante ou anormale, voire une dégradation, de la roue libre 30 ou d'un palier 71-74. Dans ce cas, le calculateur principal 100 peut générer un signal d'alerte transmis à l'alerteur 101 pour signaler cette usure importante ou anormale, voire cette dégradation.

Cette quantité estimée de limaille peut être comparée de préférence à un ou deux seuils limites.

Les senseurs 60 peuvent comprendre un ou des tachymètres 68,69 permettant de déterminer une différence de vitesse de rotation entre la partie menante 31 et la partie menée 35, correspondant à une vitesse de glissement de la roue libre 30, et par suite de détecter un éventuel glissement de la roue libre 30. Un premier tachymètre 68 peut par exemple mesurer la vitesse de rotation de la partie menante 31, via par exemple une mesure de la vitesse de rotation d'un arbre moteur d'un moteur 85 relié à la partie menante 31. Un second tachymètre 69 peut par exemple mesurer la vitesse de rotation de la partie menée 35, via par exemple une mesure de la vitesse de rotation d'un arbre d'entrée d'une boîte de transmission de puissance 90 relié à la partie menée 35, voire d'un mât rotor. La méthode de surveillance selon l'invention permet alors, en présence d'une vitesse de glissement dépassant une limite de glissement, de détecter un glissement important, voire anormal de la roue libre 30. Dans ce cas, le calculateur principal 100 peut générer un signal d'alerte transmis à l'alerteur 101 pour signaler ce glissement important, voire anormal.

Cette vitesse de glissement peut être comparée de préférence à un ou deux seuils limites ou à une ou deux fonctions limites.

Les senseurs 60 peuvent comprendre un ou des compteurs 67 permettant de déterminer un premier nombre de cycles synchronisés et/ou un second nombre de cycles désynchronisés de la roue libre 30, le premier nombre de cycles synchronisés correspondant au nombre de fois où la roue libre 30 a été engagé et le second nombre de cycles désynchronisés correspondant au nombre de fois où à la roue libre 30 a été désengagée. Le ou les compteurs 67 peuvent faire partie intégrante du calculateur principal 100 ou d'un calculateur secondaire, dédié ou partagé, relié audit au moins un tachymètre 68,69. Ce ou ces nombres peuvent en effet être déterminés en fonction de la vitesse de glissement de la roue libre 30, la roue libre 30 étant considérée engagée lorsque cette vitesse de glissement est inférieure ou égale à un seuil d'engagement, voire nulle, et désengagée lorsque cette vitesse de glissement est supérieure à ce seuil d'engagement. Le seuil d'engagement est par exemple égal à 5% de la vitesse nominale de rotation de la roue libre 30.

La méthode de surveillance selon l'invention permet alors, en présence d'un premier nombre de cycles synchronisés ou d'un second nombre de cycles désynchronisés dépassant une limite de cycles, de détecter une usure importante de la roue libre 30. Dans ce cas, le calculateur principal 100 peut générer un signal d'alerte transmis à l'alerteur 101 pour signaler cette usure importante.

Ce nombre de cycles synchronisés ou désynchronisés peut être comparé de préférence à un ou deux seuils limites.

Les senseurs 60 peuvent comprendre un ou des chronomètres 65 permettant de déterminer une durée d'engagement *Deng* de la roue libre 30, cette durée d'engagement *Deng* étant le temps entre le début d'engagement de la roue libre 30, à savoir lorsque la différence de vitesse de rotation entre la partie menante 31 et la partie menée 35 commence à diminuer et l'état engagé de la roue libre 30, à savoir lorsque cette vitesse de glissement est inférieure au seuil d'engagement. Le ou les chronomètres 65 peuvent faire partie intégrante du calculateur principal 100 ou d'un calculateur secondaire, dédié ou partagé, relié audit au moins un tachymètre 68,69. Cette durée d'engagement *Deng* peut en effet être déterminée en fonction de la différence de vitesse de rotation entre la partie menante 31 et la partie menée 35. La méthode de surveillance selon l'invention permet alors, en présence d'une durée d'engagement *Deng* dépassant une limite d'engagement de détecter une usure importante, voire une dégradation, de la roue libre 30. Dans ce cas, le calculateur principal 100 peut générer un signal d'alerte transmis à l'alerteur 101 pour signaler cette usure importante, voire cette dégradation.

Cette durée d'engagement *Deng* peut être comparée de préférence à un ou deux seuils limites ou à une ou deux fonctions limites.

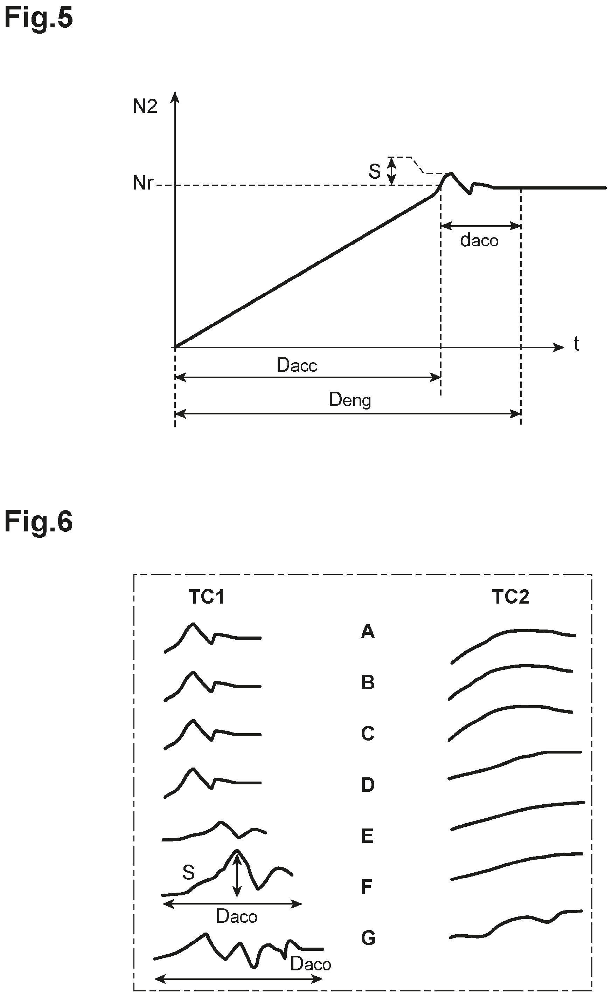

La figure 5 représente un graphe avec une courbe de variation de la vitesse de rotation *N2* de la partie menante 31 reliée à un arbre moteur d'un moteur 85 en fonction du temps. La durée d'engagement *Deng* est visible sur ce graphe. La vitesse nominale de rotation de la partie menante 31 est désignée « *Nr* ».

Le ou les chronomètres 65 permettent également de déterminer une durée d'accostage *Daco* de la roue libre 30, cette durée d'accostage *Daco* étant le temps nécessaire à la stabilisation de la partie menée 35 à la vitesse nominale de rotation de la partie menante 31. Cette durée d'accostage *Daco* est ainsi le temps entre le début d'accostage de la roue libre 30, à savoir lorsque la vitesse de rotation de la partie menée 35 atteint une vitesse sensiblement égale à la vitesse de rotation de la partie menante 31, éventuellement à une marge prédéterminée près, et l'état engagé de la roue libre 30, à savoir lorsque la vitesse de glissement est inférieure au seuil d'engagement. La marge prédéterminée est par exemple comprise entre 5 et 10% de la vitesse nominale de rotation de la roue libre 30. La méthode de surveillance selon l'invention permet alors, en présence d'une durée d'accostage *Daco* dépassant une limite d'accostage de détecter une usure importante, voire une dégradation, de la roue libre 30.

Le ou les chronomètres 65 permettent également de déterminer une durée d'accélération angulaire *Dacc* de la partie menante 31 de la roue libre 30, cette durée d'accélération angulaire *Dacc* étant le temps entre la mise en rotation de la partie menante 31 et le début d'accostage de la roue libre 30. La méthode de surveillance selon l'invention permet alors, en présence d'une durée d'accélération angulaire *Dacc* dépassant une limite d'accélération de détecter une usure importante, voire une dégradation, de la roue libre 30. En effet, une roue libre 30 usée, voire dégradée, peut générer un couple résistant susceptible de freiner l'arbre moteur entraînant la roue libre 30, et par suite peut engendrer une augmentation du temps d'accélération de ce moteur 85. Ce couple résistant peut alternativement ou de façon complémentaire avoir pour conséquence une augmentation du débit de carburant d'un doseur de carburant alimentant la chambre de combustion du moteur 85. La méthode de surveillance selon l'invention peut éventuellement permettre alors, en présence d'un débit de carburant dépassant une limite de débit, de détecter une telle usure importante, voire une dégradation, de la roue libre 30.

La durée d'accostage *Daco* et la durée d'accélération angulaire *Dacc* sont visibles sur le graphe de la figure 5.

Comme précédemment, le ou les chronomètres 65 peuvent faire partie intégrante du calculateur principal 100 ou d'un calculateur secondaire, dédié ou partagé, relié audit au moins un tachymètre 68,69. Ces durées d'accostage et d'accélération angulaire peuvent en effet être déterminées en fonction des vitesses de rotation de la partie menante 31 et la partie menée 35. Dans ces deux cas, le calculateur principal 100 peut générer un signal d'alerte transmis à l'alerteur 101 pour signaler cette usure importante, voire cette dégradation.

Enfin, le ou les tachymètres 68,69 permettent de déterminer une survitesse d'accostage *S* de la roue libre 30, cette survitesse d'accostage étant la vitesse maximale atteinte par la partie menante 31 et la partie menée 32 lors de l'engagement de la roue libre 30. Cette survitesse d'accostage *S* est une augmentation des vitesses de rotation des parties menante 31 et menée 32 qui est une conséquence de la réponse de la chaîne cinématique reliée à la partie menée 32 de l'énergie additionnelle transmise pendant l'accostage, le temps que la régulation du moteur 85 puisse restabiliser sa vitesse de rotation, les vitesses de rotation des parties menante 31 et menée 32 étant sensiblement égales. Une telle survitesse d'accostage *S* peut varier, en fonction de la technologie de la roue libre 30, et notamment être faible ou inexistante. La méthode de surveillance selon l'invention permet alors, en présence d'une survitesse d'accostage supérieure à une limite haute de survitesse ou inférieure à une limite basse de survitesse, la limite haute de survitesse étant supérieure à la limite basse de survitesse, de détecter une usure importante, voire une dégradation, de la roue libre 30. Dans ce cas, le calculateur principal 100 peut générer un signal d'alerte transmis à l'alerteur 101 pour signaler cette usure importante, voire cette dégradation.

Cette survitesse d'accostage de la roue libre 30 est également visible sur le graphe de la figure 5.

La méthode de surveillance selon l'invention permet ainsi avantageusement, grâce aux mesures de ces paramètres et leur analyse, de surveiller le fonctionnement de la roue libre 30 et de ses composants, permettant de détecter d'une part une usure importante voire anormale, ainsi que d'anticiper un dysfonctionnement éventuel. La méthode de surveillance selon l'invention permet ainsi d'alerter de cette détection afin de réaliser une opération de maintenance sur la roue libre 30 de façon optimisée, à savoir lorsque celle-ci est nécessaire évitant d'une part une maintenance inutile et d'autre part d'éviter un dysfonctionnement de la roue libre 30 lors de son utilisation.

La figure 6 représente, pour deux technologies TC1 et TC2 *distinctes de roues libres 30, les évolutions de leurs durées d'accostage *Daco* et de leurs survitesses d'accostage *S* en fonction de leurs durées d'utilisation A-G. On constate notamment que pour la seconde technologie TC2, la survitesse d'accostage *S* n'est pas présente. La durée d'utilisation A correspond par exemple à une roue libre 30 à l'état neuf, les durées d'utilisation B,C,D,E,F correspondant respectivement à des durées de l'ordre de 100 heures, 500 heures, 1000 heures, 2000 heures et 3000 heures. La durée d'utilisation G représente enfin une roue libre 30 présentant une usure très importante et une difficulté d'engagement, caractérisées notamment par une durée d'accostage *Daco* importante.

En référence à la figure 2, la méthode de surveillance comporte enfin une émission 250 d'une alerte en fonction de la comparaison 220 effectuée par le calculateur principal 100.

Dans le cas où ladite au moins une limite comporte un unique seuil limite ou une unique fonction limite, cette émission d'une alerte est effectuée dès que ce seuil limite ou cette fonction limite est dépassée par la ou les valeurs évaluées du paramètre concerné.

Dans le cas où ladite au moins une limite comporte deux seuils limites ou deux fonctions limites, cette émission 250 d'une alerte comportent une émission 251 d'une première alerte lorsqu'uniquement un des seuils limites ou une des fonctions limites est dépassé et une émission 252 d'une seconde alerte lorsque les deux seuils limites ou les deux fonctions limites sont dépassés.

Dans le cas d'une telle détection, une alerte est émise à l'aide de l'alerteur 101 recevant, via une liaison filaire ou sans fil un signal d'alerte, électrique ou optique, numérique ou analogique, émis par le calculateur principal 100. Cette alerte peut être émise sous forme sonore, visuelle ou haptique.

Par ailleurs, pour au moins un des paramètres, les acquisitions 210 successives peuvent être effectuées dans différentes phases de fonctionnement de la roue libre 30 parmi :
- une phase engagée de la roue libre 30, la roue libre 30 étant dans un état engagé,
- une phase désengagée de la roue libre 30, la roue libre 30 étant dans un état désengagé
- une phase d'engagement de la roue libre 30, et
- une phase de désengagement de la roue libre 30.

Chacune de ces phases de fonctionnement peut être déterminée à l'aide de la vitesse de glissement de la roue libre 30, et de fait des vitesses de rotation de la partie menante 31 et de la partie menée 32, voire des accélérations de de la partie menante 31 et de la partie menée 32égales respectivement à des dérivées temporelles de ces vitesse de rotation. En effet, on peut considérer que la roue libre 30 est dans la phase engagée lorsque la vitesse de glissement est sensiblement constante et inférieure ou égale au seuil d'engagement, voire nulle, les vitesses de rotation de la partie menante 31 et de la partie menée 32 étant non nulles, et que les dérivées des vitesses de rotation des parties menante 31 et menée 32 sont faible, voire nulles.

De plus, on peut considérer que la roue libre 30 est dans la phase désengagée lorsque cette vitesse de glissement est sensiblement constante et supérieure au seuil d'engagement, les vitesses de rotation de la partie menante 31 et de la partie menée 32 étant significativement différentes, la vitesse de rotation de la partie menante 31 étant par exemple inférieure à la vitesse de rotation de la partie menée 32.

On peut encore considérer que la roue libre 30 est dans la phase d'engagement lorsque la vitesse de glissement est supérieure au seuil d'engagement, les vitesses de rotation de la partie menante 31 et de la partie menée 32 étant significativement différentes, la vitesse de rotation de la partie menante 31 étant par exemple inférieure à la vitesse de rotation de la partie menée 32, et que la dérivée de la vitesse de rotation de la partie menante 31 est élevée. La roue libre 30 peut également être considérée comme étant dans la phase d'engagement lorsque la vitesse de glissement est sensiblement constante et supérieure au seuil d'engagement, voire nulle, les vitesses de rotation de la partie menante 31 et de la partie menée 32 étant non nulles, et que les dérivées des vitesses de rotation des parties menante 31 et menée 32 sont oscillantes autour de zéro sur la durée d'accostage *Daco.*

Enfin, on peut considérer que la roue libre 30 est dans la phase de désengagement lorsque cette vitesse de glissement augmente, par exemple à partir d'une vitesse de glissement supérieure à ce seuil d'engagement. Cette phase de désengagement correspond en effet à une phase où la partie menante 31 commence à tourner moins vite que la partie menée 32. Concrètement, lors de la mise en veille d'un moteur pour le mode de fonctionnement asymétrique, la vitesse de rotation de la partie menante 31 diminue et devient inférieure à la vitesse de rotation de la partie menée 32, jusqu'à être faible, si le moteur 80 est à un régime de ralenti ou de super-ralenti, voire nulle s'il est éteint et arrêté. La vitesse de glissement est ainsi maximale lorsque le moteur est en veille.

Dans ce cas, pour ce ou ces paramètres, des limites spécifiques peuvent être associées respectivement à ces phases de fonctionnement.

De la sorte, la surveillance de la roue libre 30 peut être optimisée, en prenant en compte les variations des caractéristiques d'un ou de plusieurs paramètres en fonction de ces phases de fonctionnement de la roue libre 30.

De plus, des phases de démarrage d'un moteur 85 entraînant la roue libre 30, et d'arrêt de ce moteur 85 peuvent également être prises en compte, ces deux phases de démarrage et d'arrêt du moteur 85 intégrant respectivement les phases d'engagement et de désengagement de la roue libre 30.

On peut alors considérer que, lorsque les vitesses de rotation de la partie menante 31 et de la partie menée 32 sont égales et nulles, la totalité de la chaîne cinématique est arrêtée, du moteur 85 au rotor.

On peut encore considérer que, si la vitesse de rotation de la partie menante 31 est inférieure à la vitesse de rotation de la partie menée 32, la vitesse de rotation de la partie menante 31 ainsi que sa dérivée temporelle étant sensiblement nulle, le moteur 85 est arrêté, voire éteint, ou dans un régime de super ralenti.

Par ailleurs, la méthode de surveillance selon l'invention peut comporter une étape préalable de détermination 110 de ladite au moins une limite.

Cette détermination 110 de ladite au moins une limite peut être effectuée avec une roue libre 30 à l'état neuf ou après une durée initiale prédéterminée d'utilisation de la roue libre 30.

De plus, pour au moins un des paramètres, la détermination 110 de ladite au moins une limite peut être effectuée dans les différentes phases de fonctionnement de la roue libre 30 précédemment citées, ces limites pouvant alors être spécifiques à ces phases de fonctionnement.

De plus, lorsque ladite au moins une limite comporte une ou deux fonctions limites, cette détermination 110 de ladite au moins une limite peut comporter une définition 112 de chaque fonction limite à l'aide d'un ou de plusieurs senseurs 60, cette définition 112 comprenant les sous-étapes suivantes :
- détermination 113 de mesures initiales successives du paramètre à l'aide du senseur 60,
- traitement 115 des mesures initiales pour obtenir des valeurs initiales successives, les valeurs initiales pouvant être égales aux mesures initiales du paramètre ainsi qu'à des intégrations temporelles ou à des dérivées temporelles des mesures initiales, et
- établissement 117 de la fonction limite en fonction des valeurs initiales successives.

Cette détermination 110 de ladite au moins une limite peut également être effectuée en fonction d'au moins un paramètre indépendant la roue libre 30, choisi parmi au moins un paramètre atmosphérique, et au moins un paramètre de vol d'un aéronef 99 équipé de la roue libre 30.

Un paramètre atmosphérique peut comporter notamment une température atmosphérique, une pression atmosphérique et une altitude. Un paramètre de vol d'un aéronef 99 équipé de la roue libre 30 peut quant à lui comporter une vitesse d'avancement de l'aéronef 99, une vitesse de rotation d'au moins un de ses rotors, son attitude, et/ou la puissance fournie par ses moteurs 85.

Chaque limite correspondant à une valeur d'au moins un de ces paramètres indépendant de la roue libre 30 peut être stockée dans une mémoire ou être calculée selon une loi stockée dans cette mémoire et appliquée par le calculateur principal 100.

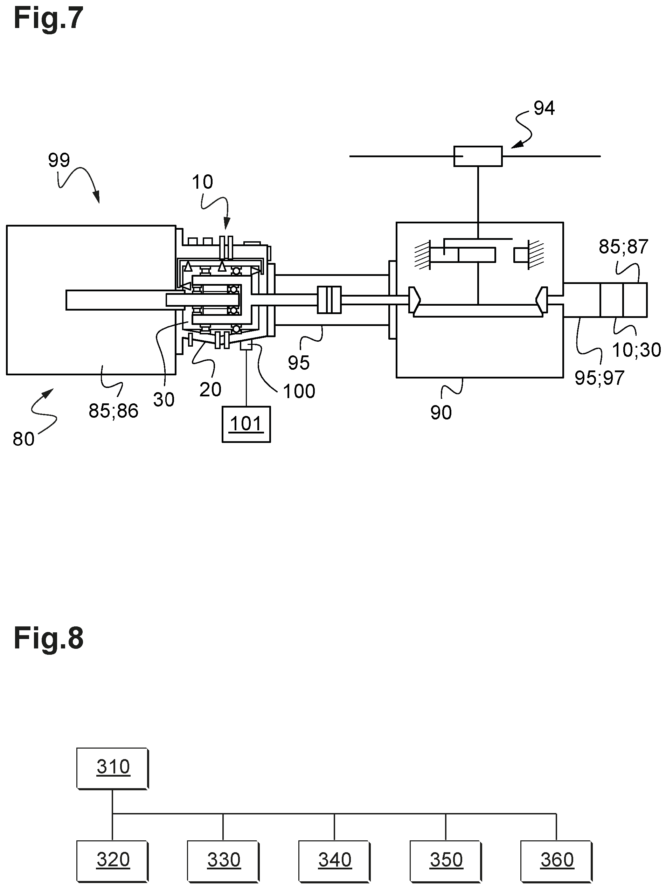

Par ailleurs, la figure 7 illustre une installation motrice 80 munie d'au moins deux moteurs 86, 87 pour mettre en mouvement le système mécanique 94. L'installation motrice 80 comporte au moins deux roues libres 30 afin que les moteurs 85 transmettent une puissance motrice respectivement aux parties menantes 31 de ces roues libres 30. Les moteurs 85 sont éventuellement régulés, par des systèmes de régulation usuels non représentés pour ne pas alourdir la figure, pour fonctionner sur requête selon un mode de fonctionnement collaboratif ou un mode de fonctionnement asymétrique. Durant le mode de fonctionnement collaboratif, les deux moteurs 86, 87 sont régulés pour développer chacun une puissance motrice. A l'inverse, durant le mode de fonctionnement asymétrique les deux moteurs 86, 87 sont régulés pour qu'au moins un moteur 86 soit actif en développant une puissance motrice et qu'au moins un moteur 87 soit en veille en ne transmettant pas une puissance motrice.

L'installation motrice 80 comporte également un calculateur principal 100 et un alerteur 101.

La figure 8 illustre une méthode de contrôle d'une telle installation motrice 80 multimoteur. Le calculateur principal 100 peut mettre en œuvre cette méthode de contrôle à l'aide d'instructions, par exemple un programme d'ordinateur, stockées dans une mémoire du calculateur principal 100 ou reliée à lui.

Cette méthode de contrôle, dans le cas où ladite au moins une limite comporte un unique seuil limite ou une unique fonction limite, comporte les étapes suivantes.

Une surveillance 310 de chaque roue libre est effectuée en appliquant la méthode de surveillance d'une roue libre 30 précédemment décrite.

Dès lors, et en fonction de cette surveillance 310, une sortie automatique 320 du mode de fonctionnement asymétrique est effectuée lors de ce mode de fonctionnement asymétrique et suite à l'émission de l'alerte, cette sortie automatique 320 du mode de fonctionnement asymétrique comportant une réactivation du ou des moteurs 85 en veille
Une étape de maintien automatique 330 dans le mode de fonctionnement collaboratif peut également être effectuée lors de ce mode de fonctionnement collaboratif et suite à l'émission de l'alerte, l'étape de maintien automatique 330 dans le mode de fonctionnement collaboratif empêchant une mise en veille du ou des moteurs 85 actifs.

De plus, lorsque l'installation motrice 80 équipe un aéronef 99, cette méthode de contrôle peut comporter une étape de limitation 350 d'une vitesse de vol d'avancement de l'aéronef 99 ou d'un couple du moteur 85 entraînant la roue libre 30 pour laquelle la valeur évaluée dépasse sa limite, effectuée suite à l'émission de l'alerte, un contrôleur pilotant les moteurs 85 afin que la vitesse de vol d'avancement de l'aéronef 99 ne dépasse pas la vitesse limite. Ce couple est en effet représentatif de la puissance fournie par ce moteur 85, par exemple pour une vitesse de vol d'avancement donnée de l'aéronef 99. Dès lors, limiter ce couple permet de limiter la sollicitation de la roue libre 30 considérée comme usée, voire dégradée. L'autre moteur 85 de l'installation motrice 80 peut quant à lui fournir un couple ou une puissance supérieure pour compenser cette limitation.

De la sorte, l'aéronef 99 sollicite moins les moteurs 85 de l'installation motrice 80, et donc moins les roues libres 30 jusqu'à son atterrissage afin de limiter le risque de dégrader les roues libres 30.

Alternativement, dans le cas où ladite au moins une limite comporte deux seuils limites ou deux fonctions limites associés à une première alerte et une seconde alerte, la méthode de contrôle selon l'invention comporte alors les étapes suivantes.

Une surveillance 310 de chaque roue libre est effectuée en appliquant la méthode de surveillance d'une roue libre 30 précédemment décrite.

Ensuite, une sortie automatique 320 du mode de fonctionnement asymétrique est effectuée lors de ce mode de fonctionnement asymétrique et suite à l'émission de la seconde alerte, cette sortie automatique 320 du mode de fonctionnement asymétrique comportant une réactivation du ou des moteurs 85 en veille. Le calculateur principal 100 transmet un signal au contrôleur concerné pour requérir la réactivation.

Une étape de maintien automatique 330 dans le mode de fonctionnement collaboratif peut également être effectuée lors de ce mode de fonctionnement collaboratif et suite à l'émission de la première alerte ou de la seconde alerte, l'étape de maintien automatique 330 dans le mode de fonctionnement collaboratif empêchant une mise en veille du ou des moteurs 85 actifs. Le calculateur principal 100 transmet un signal au contrôleur pour interdire l'application du mode de fonctionnement asymétrique.

Une étape de restriction 340 du mode de fonctionnement asymétrique peut encore être effectuée lors de ce mode de fonctionnement asymétrique et suite à l'émission de la première alerte, l'étape de restriction 340 du mode de fonctionnement asymétrique autorisant un maintien en veille du ou des moteurs 85 en veille pendant une durée prédéterminée, de l'ordre de plusieurs minutes à plusieurs dizaines de minutes par exemple, une réactivation du ou des moteurs 85 en veille étant effectuée automatiquement à la fin de la durée prédéterminée.

De plus, lorsque l'installation motrice 80 équipe un aéronef 99, cette méthode de contrôle peut comporter une étape de limitation 350 d'une vitesse de vol d'avancement de l'aéronef 99 effectuée suite à l'émission de la seconde alerte, un contrôleur pilotant les moteurs 85 afin que la vitesse de vol d'avancement de l'aéronef 99 ne dépasse pas la vitesse limite.

La méthode de contrôle selon l'invention permet ainsi de limiter la sollicitation de la roue libre 30, jusqu'à l'atterrissage de l'aéronef 99.

Enfin, la méthode de contrôle selon l'invention peut comporter une étape d'inhibition 360 du mode de fonctionnement collaboratif effectuée lors du mode de fonctionnement asymétrique et suite à l'émission de l'alerte ou de la seconde alerte le cas échéant, relative alors à la différence de vitesse de rotation. En effet, lorsque cette différence de vitesse de rotation est importante et caractéristique d'une dégradation très importante de la roue libre 35, il peut être nécessaire d'inhiber le mode de fonctionnement collaboratif en obligeant l'installation motrice 80 à rester en mode de fonctionnement asymétrique, et éviter ainsi des dégradations supplémentaires de la chaîne cinématique, voire du moteur 80.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention définie par les revendications.

## Revendications

1. Méthode de surveillance d'une roue libre (30),
ladite roue libre (30) étant agencée dans un carter (20), ladite roue libre (30) comprenant une partie menante (31) et une partie menée (35) agencées au moins dans un volume interne (INT) délimité par ledit carter (20), un circuit de lubrification (40) lubrifiant ladite roue libre (30) dans ledit carter (20), plusieurs senseurs (60) surveillant le fonctionnement de ladite roue libre (30),
ladite méthode comprenant les étapes suivantes réalisées de manière successive :
- acquisitions (210) de valeurs évaluées de plusieurs paramètres à l'aide desdits senseurs (60), lesdits paramètres étant choisis parmi :
• un signal vibratoire déterminé à l'aide d'un accéléromètre (61),
• une première température d'une peau dudit carter (20) déterminée à l'aide d'un premier senseur de température (62),
• une pression d'un fluide circulant au sein dudit circuit de lubrification (40) déterminée à l'aide d'un senseur de pression (63),
• une seconde température dudit fluide circulant au sein dudit circuit de lubrification (40) déterminée à l'aide d'un second senseur de température (64),
• une quantité de limaille captée dans ledit fluide par un bouchon magnétique (66),
• un premier nombre de cycles synchronisés et un second nombre de cycles désynchronisés correspondant respectivement à ladite roue libre (30) engagée et désengagée déterminés à l'aide d'un compteur (67),
• une différence de vitesse de rotation entre ladite partie menante (31) et ladite partie menée (35), déterminée à l'aide d'au moins un tachymètre (68),
• une durée d'engagement de ladite roue libre (30),
• une durée d'accostage de ladite roue libre (30),
• une survitesse d'accostage de ladite roue libre (30), déterminée à l'aide d'au moins un tachymètre (68), et
• une durée d'accélération angulaire de ladite partie menante (31) de ladite roue libre (30),
- pour chaque paramètre, comparaison (220) d'au moins une desdites valeurs évaluées de ce paramètre avec au moins une limite respective,
- émission (250) d'une alerte en fonction de ladite comparaison.

2. Méthode de surveillance selon la revendication 1,
dans laquelle pour au moins un desdits paramètres, lesdites acquisitions (210) d'une valeur évaluée de ce paramètre comportent les sous-étapes suivantes :
- mesure (212) d'une valeur mesurée du paramètre,
- détermination (215) de la valeur évaluée à partir de la valeur mesurée, ladite valeur évaluée étant égale à ladite valeur mesurée, à une intégration temporelle ou à une dérivée temporelle de ladite valeur mesurée, à une fréquence, une largeur de bande ou une amplitude associées à la valeur mesurée, à une valeur minimale ou maximale de la valeur mesurée.

3. Méthode de surveillance selon l'une quelconque des revendication 1 à 2,
dans laquelle ladite au moins une limite d'au moins un desdits paramètres comporte un seuil limite ou une fonction limite, ledit seuil limite étant comparé à ladite dernière valeur évaluée de ce paramètre, ladite fonction limite étant comparée auxdites valeurs évaluées successives de ce paramètre pendant un temps prédéterminé, ladite émission d'une alerte étant effectuée si ledit seuil limite ou ladite fonction limite est dépassée.

4. Méthode de surveillance selon l'une quelconque des revendications 1 à 2,
dans laquelle ladite au moins une limite d'au moins un desdits paramètres comporte deux seuils limites ou deux fonctions limites, ladite émission d'une alerte comportant une émission d'une première alerte si uniquement un desdits seuils limites ou une desdites fonctions limites est dépassé et d'une seconde alerte si lesdits deux seuils limites ou lesdites deux fonctions limites sont dépassés, lesdits deux seuils limites étant comparés à ladite dernière valeur évaluée de ce paramètre, lesdites fonctions limites étant comparées auxdites valeurs évaluées successives de ce paramètre pendant un temps prédéterminé.

5. Méthode de surveillance selon la revendication 3 ou 4,
dans laquelle une dite fonction limite est dépassée lorsque qu'au moins une valeur évaluée d'un paramètre s'écarte de ladite fonction limite d'un écart supérieur à un premier seuil d'écart ou lorsque lesdites valeurs évaluées s'écartent de la fonction limite d'un écart supérieur à un second seuil d'écart pendant une durée de comparaison inférieure au temps prédéterminé, ledit premier seuil d'écart étant supérieur audit second seuil d'écart.

6. Méthode de surveillance selon l'une quelconque des revendications 1 à 5,
dans laquelle ladite méthode comporte une détermination (110) de ladite au moins une limite avec une roue libre neuve ou après.

7. Méthode de surveillance selon la revendication 6,
dans laquelle pour au moins un desdits paramètres, ladite détermination (110) de ladite au moins une limite est effectuée durant différentes phases de fonctionnement de ladite roue libre (30) parmi :
- une phase engagée de ladite roue libre (30), ladite roue libre (30) étant dans un état engagé,
- une phase désengagée de ladite roue libre (30), ladite roue libre (30) étant dans un état désengagé,
- une phase d'engagement de ladite roue libre (30), et
- une phase de désengagement de ladite roue libre (30),
pour chaque paramètre, des limites spécifiques associées respectivement auxdites phases de fonctionnement étant établies.

8. Méthode de surveillance selon l'une quelconque des revendications 1 à 7,
dans laquelle pour au moins un desdits paramètres, lesdites acquisitions (210) successives sont effectuées durant différentes phases de fonctionnement de ladite roue libre (30) parmi :
- une phase engagée de ladite roue libre (30), ladite roue libre (30) étant dans un état engagé,
- une phase désengagée de ladite roue libre (30), ladite roue libre (30) étant dans un état désengagé
- une phase d'engagement de ladite roue libre (30), et
- une phase de désengagement de ladite roue libre (30),
pour chaque paramètre, des limites spécifiques étant associées respectivement auxdites phases de fonctionnement.

9. Méthode de surveillance selon l'une quelconque des revendications 1 à 8,
dans laquelle ladite au moins une limite est déterminée en fonction d'au moins un paramètre indépendant de ladite roue libre (30), choisi parmi au moins un paramètre atmosphérique comportant une température atmosphérique, une pression atmosphérique et une altitude, et au moins un paramètre de vol d'un aéronef (99) équipé de ladite roue libre (30).

10. Méthode de contrôle d'une installation motrice (80),
ladite installation motrice (80) comprenant au moins deux roues libres (30) et au moins deux moteurs (85) pour mettre en mouvement un système mécanique (94), chaque roue libre (30) étant reliée à un arbre moteur d'un seul desdits moteurs (85) et audit système mécanique (94), lesdits au moins deux moteurs (85) étant configurés pour fonctionner sur requête selon un mode de fonctionnement collaboratif durant lequel lesdits deux moteurs (85) développent chacun une puissance motrice non nulle et un mode de fonctionnement asymétrique durant lequel au moins un desdits moteurs (85) est actif en développant une puissance motrice et au moins un desdits moteurs (85) est en veille en ne transmettant pas une puissance motrice, et
ladite méthode de contrôle comporte :
- une surveillance(310) de chaque roue libre en appliquant ladite méthode de surveillance d'une roue libre (30) selon l'une quelconque des revendications 3 et 5 à 9, ladite au moins une limite d'au moins un desdits paramètres comportant un seuil limite ou une fonction limite, la méthode de contrôle comportant :
- une sortie automatique (320) dudit mode de fonctionnement asymétrique effectuée lors dudit mode de fonctionnement asymétrique et suite à ladite émission de ladite alerte, ladite sortie automatique (320) dudit mode de fonctionnement asymétrique comportant une réactivation dudit au moins un moteur (85) en veille, et
- une étape de maintien automatique (330) dans ledit mode de fonctionnement collaboratif effectuée lors dudit mode de fonctionnement collaboratif et suite à ladite émission de ladite alerte, ladite étape de maintien automatique (330) dans ledit mode de fonctionnement collaboratif empêchant une mise en veille dudit ou desdits moteurs (85) actifs.

11. Méthode de contrôle d'une installation motrice (80) d'une installation motrice (80),
ladite installation motrice (80) comprenant au moins deux roues libres (30) et au moins deux moteurs (85) pour mettre en mouvement un système mécanique (94), chaque roue libre (30) étant reliée à un arbre moteur d'un seul desdits moteurs (85) et audit système mécanique (94), lesdits au moins deux moteurs (85) étant configurés pour fonctionner sur requête selon un mode de fonctionnement collaboratif durant lequel lesdits deux moteurs (85) développent chacun une puissance motrice non nulle et un mode de fonctionnement asymétrique durant lequel au moins un desdits moteurs (85) est actif en développant une puissance motrice et au moins un desdits moteurs (85) est en veille en ne transmettant pas une puissance motrice, et
ladite méthode de contrôle comporte :
- une surveillance (310) de chaque roue libre en appliquant ladite méthode de surveillance d'une roue libre (30) selon l'une quelconque des revendications 4 à 9, ladite au moins une limite d'au moins un desdits paramètres comportant deux seuils limites ou deux fonctions limites,
- une sortie automatique (320) dudit mode de fonctionnement asymétrique effectuée lors dudit mode de fonctionnement asymétrique et suite à ladite émission de ladite seconde alerte, ladite sortie automatique (320) dudit mode de fonctionnement asymétrique comportant une réactivation dudit au moins un moteur (85) en veille,
- une étape de maintien automatique (330) dans ledit mode de fonctionnement collaboratif effectuée lors dudit mode de fonctionnement collaboratif et suite à ladite émission de ladite première alerte ou de ladite première alerte, ladite étape de maintien automatique (330) dans ledit mode de fonctionnement collaboratif empêchant une mise en veille dudit ou desdits moteurs (85) actifs, et
- une étape de restriction (340) dudit mode de fonctionnement asymétrique effectuée lors dudit mode de fonctionnement asymétrique et suite à ladite émission de ladite première alerte, ladite étape de restriction (340) dudit mode de fonctionnement asymétrique autorisant un maintien en veille dudit au moins un moteur (85) en veille pendant une durée prédéterminée, une réactivation dudit au moins un moteur (85) en veille étant effectuée automatiquement à la fin de ladite durée prédéterminée.

12. Méthode de contrôle d'une installation motrice (80) selon la revendication 10,
dans laquelle ladite installation motrice (80) équipant un aéronef (99), ladite méthode de contrôle comporte une étape de limitation (350) d'une vitesse de vol d'avancement dudit aéronef (99) ou d'un couple dudit moteur (85) entraînant ladite roue libre (30) pour laquelle ladite valeur évaluée dépasse sa limite, effectuée suite à ladite émission de ladite alerte, un contrôleur pilotant lesdits au moins deux moteurs (85) afin que ladite vitesse de vol d'avancement dudit aéronef (99) reste inférieure ou égale à une vitesse limite.

13. Méthode de contrôle d'une installation motrice (80) selon la revendication 11,
dans laquelle ladite installation motrice (80) équipant un aéronef (99), ladite méthode de contrôle comporte une étape de limitation (350) d'une vitesse de vol d'avancement dudit aéronef (99) effectuée suite à ladite émission de ladite seconde alerte, un contrôleur pilotant lesdits au moins deux moteurs (85) afin que ladite vitesse de vol d'avancement dudit aéronef (99) reste inférieure ou égale à une vitesse limite.

14. Méthode de contrôle d'une installation motrice (80) selon l'une quelconque des revendications 10 à 13,
dans laquelle ladite méthode de contrôle comporte une étape d'inhibition (360) dudit mode de fonctionnement collaboratif effectuée lors dudit mode de fonctionnement asymétrique et suite à ladite émission de ladite alerte ou de ladite seconde alerte relative à ladite différence de vitesse de rotation, ladite étape d'inhibition (360) dudit mode de fonctionnement collaboratif obligeant ladite installation motrice (80) à rester en mode de fonctionnement asymétrique.

15. Installation motrice (80) comprenant au moins un moteur (85) pour mettre en mouvement un système mécanique (94),
ladite installation motrice (80) comportant une roue libre (30) par moteur (85) pour transmettre une puissance générée par ledit au moins un moteur (85), chaque roue libre (30) étant reliée à un arbre moteur d'un dudit au moins un moteur (85) et audit système mécanique (94), ladite roue libre (30) étant agencée dans un carter (20), ladite roue libre (30) comprenant une partie menante (31) et une partie menée (35) agencées au moins dans un volume interne (INT) délimité par ledit carter (20), un circuit de lubrification (40) lubrifiant ladite roue libre (30) dans le carter (20), plusieurs senseurs (60) surveillant le fonctionnement de ladite roue libre (30),
**caractérisée en ce que** ladite installation motrice (80) comporte un calculateur principal pour mettre en œuvre ladite méthode de surveillance selon l'une quelconque des revendications 1 à 9.

16. Installation motrice (80) comprenant au moins deux moteurs (85) pour mettre en mouvement un système mécanique (94),
ladite installation motrice (80) comportant une roue libre (30) par moteur (85) pour transmettre une puissance générée par ledit au moins un moteur (85), chaque roue libre (30) étant reliée à un arbre moteur d'un seul desdits moteurs (85) et audit système mécanique (94), chaque roue libre (30) étant agencée dans un carter (20), chaque roue libre (30) comprenant une partie menante (31) et une partie menée (35) agencées au moins dans un volume interne (INT) délimité par ledit carter (20), un circuit de lubrification (40) lubrifiant chaque roue libre (30) dans le carter (20), plusieurs senseurs (60) surveillant le fonctionnement de chaque roue libre (30),
**caractérisée en ce que** ladite installation motrice (80) comporte un calculateur principal pour mettre en œuvre ladite méthode de contrôle selon l'une quelconque des revendications 10 à 14.

17. Aéronef (99) comprenant une installation motrice (80) selon l'une quelconque des revendications 15 à 16.
